# EUROPÄISCHE PATENTSCHRIFT

(11) **EP 1 397 617 B1**
(45) Veröffentlichungstag und Bekanntmachung des Hinweises auf die Patenterteilung: **01.03.2006**
(21) Anmeldenummer: 02732746.9
(22) Anmeldetag: 03.06.2002
(51) Int. Cl.: F24F 3/14, F24F 6/14

(54) **LUFTBEFEUCHTUNGSVORRICHTUNG**
AIR HUMIDIFYING DEVICE
DISPOSITIF D'HUMIDIFICATION D'AIR

(30) Priorität: 20.06.2001 DE 10129367
(43) Veröffentlichungstag der Anmeldung: 17.03.2004
(73) Patentinhaber: Klingenburg GmbH, 45968 Gladbeck (DE)
(72) Erfinder: KLINGENBURG, Hans, 45239 Essen (DE); WESTERDORF, Thomas, 44795 Bochum (DE)
(74) Vertreter: Lelgemann, Karl-Heinz
(86) Internationale Anmeldenummer: PCT/EP2002/006037
(87) Internationale Veröffentlichungsnummer: WO 2003/001120

(56) Entgegenhaltungen:
- EP-A- 0 590 328
- EP-A- 0 957 321
- WO-A-95/10009
- DE-C- 515 142
- DE-C- 19 539 923
- DE-U- 20 014 241
- GB-A- 901 678
- GB-A- 1 000 941
- US-A- 5 067 655
- US-A- 5 489 153
- US-A- 5 547 540
- US-A- 6 135 629

## Beschreibung

Die Erfindung bezieht sich auf eine Luftbefeuchtungsvorrichtung nach dem Oberbegriff des Patentanspruchs 1.

In derartigen Luftbefeuchtungsvorrichtungen sollen Luftströmungen mit Feuchtigkeit beaufschlagt werden, so daß sie den an Klimatisierung, Belüftung od.dgl. gestellten Anforderungen entsprechen.

Bei bekannten derartigen Luftbefeuchtungsvorrichtungen wird ein Großteil derjenigen Flüssigkeit, die in der Düsenstufe in die Luftströmung eingedüst wird, von dieser Luftströmung nicht aufgenommen. Dies gilt insbesondere dann, sofern Schwankungen bezüglich des Luftströmungsvolumens, bezüglich des Feuchtigkeitsgehalts der in die Luftbefeuchtungsvorrichtung eintretenden Luftströmung, bezüglich des angeforderten Feuchtigkeitsgehalts der die Luftbefeuchtungsvorrichtung verlassenden Feuchtluftströmung sowie bezüglich der in die Luftströmung an der Düsenstufe eingedüsten Flüssigkeitsmenge auftreten.

Aus der EP 0 957 321 A ist eine Luftbefeuchtungsvorrichtung bekannt, die eingangsseitig an eine Luftzuleitung und ausgangsseitig an eine Feuchtluftableitung angeschlossen ist und bei der eine Luftverwirbelungsstufe, eine Düsenstufe und eine Mischstrecke vorgesehen sind.

Die Mischstrecke ist in Strömungsrichtung stromab der Düsenstufe angeordnet, wobei wiederum die Düsenstufe in Strömungsrichtung stromab der Luftverwirbelungsstufe angeordnet ist. In der Düsenstufe ist die in der Luftverwirbelungsstufe verwirbelte Luftströmung mit einer Flüssigkeit beaufschlagbar.

Die Luftverwirbelungsstufe der aus der EP 0 957 321 A bekannten Luftbefeuchtungsvorrichtung weist als Verwirbelungselemente Prallplatten auf, bei denen es sich um im wesentlichen kreisförmige Plattenelemente handelt, die in Umfangsrichtung zueinander gleich beabstandete Luftdurchlassöffnungen bzw. -schlitze aufweist. Die Umfangskante jeder Prallplatte ist zur Erzeugung turbulenter Strömungsverhältnisse mit Spitzen bzw. Mulden versehen.

Des weiteren wird in der Beschreibungseinleitung der EP 0 957 321 A eine Luftverwirbelungsstufe einer Luftbefeuchtungsvorrichtung beschrieben, bei der im Luftstromkanal Leitschaufeln bzw. Leitbleche angeordnet sind, mittels denen die Luftströmung aus einer laminaren Strömung umgelenkt und verdrallt wird.

Der Erfindung liegt die Aufgabe zugrunde, eine Luftbefeuchtungsvorrichtung der eingangs geschilderten Art derart weiterzubilden, dass die Strömungsturbulenzen im Bereich der Düsenstufe erhöht werden und so der Anteil der von der die Luftbefeuchtungsvorrichtung durchströmenden Luftströmung nicht aufgenommenen, an der Düsenstufe in die Luftströmung eingedüsten Flüssigkeitsmenge erheblich reduziert wird.

Diese Aufgabe wird erfindungsgemäß dadurch gelöst, dass die Turbulenzflügel bzw. Winglets in Reihen nebeneinander im Strömungsquerschnitt der Luftströmung angeordnet sind und dass in einer Reihe benachbarte Turbulenzflügel bzw. Winglets Luftwirbel mit gegensinniger Drehrichtung erzeugen. Hierdurch entsteht im Bereich der Düsenstufe bzw. der Austrittsöffnungen der Düsen, durch die die Flüssigkeit in den Luftstrom eintritt, eine Zone mit besonders turbulenten Strömungsverhältnissen, so dass im Vergleich zum Stand der Technik die Aufnahmefähigkeit des Luftstroms bezüglich der in ihn eingeströmten Flüssigkeit erheblich erhöht wird.

Die mittels der Turbulenzflügel bzw. Winglets erzeugten Luftwirbel erstrecken sich vorteilhaft zumindest bis zur Düsenstufe der Luftbefeuchtungsvorrichtung.

Die Reihen von Turbulenzflügeln bzw. Winglets einer Luftverwirbelungsstufe der erfindungsgemäßen Luftbefeuchtungsvorrichtung sind bei einer vorteilhaften Ausführungsform in einer Strömungsquerschnittsebene angeordnet.

Darüber hinaus können die Reihen von Turbulenzflügeln bzw. Winglets einer Luftverwirbelungsstufe zueinander parallel angeordnet sein, wobei zwischen den unterschiedlichen Reihen von Turbulenzflügeln bzw. Winglets einer Luftverwirbelungsstufe gleiche Abstände zweckmäßig sind.

Die innerhalb einer Reihe angeordneten Turbulenzflügel bzw. Winglets haben ebenfalls zueinander den gleichen Abstand, so daß die Mittelpunkte der von benachbarten Turbulenzflügeln bzw. Winglets einer Reihe erzeugten Luftwirbel zueinander gleich beabstandet sind.

Gemäß einer vorteilhaften Weiterbildung der erfindungsgemäßen Luftbefeuchtungsvorrichtung hat diese in in Strömungsrichtung alternierende Aufeinanderfolge zwei oder mehrere Luftverwirbelungs- und Düsenstufen.

Die Turbulenzflügel bzw. Winglets der Luftverwirbelungsstufe können vorteilhaft dreieckig ausgestaltet sein, wobei als Form der Turbulenzflügel bzw. Winglets insbesondere die Form eines rechtwinkligen Dreiecks in Frage kommt.

Um im Bereich der Düsenstufe und der Mischstrecke für die Aufnahme von Feuchtigkeit optimale Strömungsverhältnisse zu schaffen, ist zweckmäßigerweise die Kurzkathete jedes als rechtwinkliges Dreieck ausgebildeten Turbulenzflügels bzw. Winglets parallel und die Langkathete desselben senkrecht zur Reihe des jeweiligen Turbulenzflügels bzw. Winglets angeordnet.

Vorteilhaft sind die Langkatheten oder die Hypotenusen einander benachbarter Turbulenzflügel bzw. Winglets einer Reihe einander zugewandt.

Einander benachbarte bzw. zugeordnete Turbulenzflügel bzw. Winglets benachbarter Reihen sind zweckmäßigerweise mit ihren durch die Langkathete und die Hypotenuse gebildeten Ecken oder mit ihren Kurzkatheten einander zugewandt.

Um die Turbulenzflügel bzw. Winglets mit einer ausreichenden mechanischen Steifigkeit zu versehen, ist es möglich, an der Langkathete des Turbulenzflügels bzw. Winglets eine senrkechte Umkantung vorzusehen, wobei diese Umkantung auch für die Ausgestaltung der Strömungs- bzw. Turbulenzverhältnisse hilfreich sein kann.

Jeder Turbulenzflügel bzw. Winglet weist vorteilhaft zur Strömungsrichtung einen Anstellwinkel zwischen 30 Grad und 70 Grad, vorzugsweise zwischen 40 Grad und 60 Grad, auf, wobei die durch die Langkathete und die Hypotenuse gebildete Ecke stromauf der Kurzkathete angeordnet ist.

Optimale Strömungsverhältnisse zwecks Aufnahme von Feuchtigkeit lassen sich im Bereich der Düsenstufe und der Mischstrecke alternativ auch erreichen, indem die Langkathete jedes als rechtwinkliges Dreieck ausgebildeten Turbulenzflügels bzw. Winglets parallel und die Kurzkathete desselben senkrecht zur Reihe des jeweiligen Turbulenzflügels bzw. Winglets angeordnet ist.

Entsprechend sind die Kurzkatheten oder die Hypotenusen einander benachbarter Turbulenzflügel bzw. Winglets einer Reihe in diesem Fall einander zugewandt.

Vorteilhaft sind bei dieser Ausführungsform die durch die Kurzkathete und die Hypotenuse gebildete Ecke und die Langkathete einander benachbarter bzw. zugeordneter Turbulenzflügel bzw. Winglets benachbarter Reihen einander zugewandt.

Eine ausreichende mechanische Steifigkeit wird erreicht, wenn jeder Turbulenzflügel bzw. Winglet an seiner Kurzkathete eine senkrechte Umkantung aufweist.

Jeder Turbulenzflügel bzw. Winglet weist zweckmäßigerweise zur Strömungsrichtung einen Anstellwinkel zwischen 30 Grad und 70 Grad auf, vorzugsweise zwischen 40 Grad und 60 Grad, wobei die durch die Kurzkathete und die Hypotenuse gebildete Ecke stromauf der Langkathete angeordnet ist.

Gemäß einer vorteilhaften Weiterbildung der Luftbefeuchtungsvorrichtung sind die Anstellwinkel der Turbulenzflügel bzw. Winglets einstellbar ausgestaltet.

Vorteilhaft ist jedem Turbulenzflügel bzw. Winglet der Luftverwirbelungsstufe eine Düse der Düsenstufe zugeordnet, wobei diese dem jeweiligen Turbulenzflügel bzw. Winglet zugeordnete Düse mittig in bezug auf den von diesem Turbulenzflügel bzw. Winglet erzeugten Luftwirbel angeordnet ist.

Die Düsen zur Ausgestaltung der Düsenstufe können vorteilhaft als Dralldüsen ausgebildet sein.

Zweckmäßigerweise weist jede Dralldüse der Düsenstufe einen rotationssymmetrischen Drallraum auf, der eingangsseitig eine Drallkammer mit größerem Durchmesser hat, in die tangentiale Zuführungskanäle einmünden, die in Umfangsrichtung der Drallkammer gleich beabstandet sind.

Wenn eine Flüssigkeitszuleitung jeder Dralldüse zumindest zwei Zuführleitungen aufweist, auf die der die Flüssigkeitszuleitung durchlaufende Flüssigkeitsstrom aufteilbar ist, wobei in zumindest einer Zufuhrleitung eine Durchflußeinstelleinrichtung angeordnet ist und die zumindest zwei Zufuhrleitungen an die tangentialen Zuführungskanäle der Drallkammer angeschlossen sind, kann durch Regelung der Durchflußeinstelleinrichtung unter der Voraussetzung, daß der Druck in der Flüssigkeitszuleitung der Dralldüse konstant ist, der Volumenstrom der zu zerstäubenden Flüssigkeit halbiert werden, falls der Betrieb mit vollständig geöffneter Durchflußeinstelleinrichtung der Normalzustand ist, bzw. der Volumenstrom der zu zerstäubenden Flüssigkeit kann verdoppelt werden, falls der Betrieb mit vollständig geschlossener Durchflußeinstelleinrichtung der Normalzustand ist. Hierbei tritt keine wesentliche Änderung der Tropfengrößenverteilung auf, so daß innerhalb der beiden genannten Grenzwerte der Durchflußeinstelleinrichtung jeder Zwischenzustand eingestellt werden kann, wobei in diesem Bereich keine signifikante Änderung der Tropfengröße auftritt.

Vorteilhaft verzweigt sich jede Zufuhrleitung in gleich viele Zufuhrzweigleitungen, die jeweils zweckmäßigerweise in einen tangentialen Zuführungskanal der Drallkammer münden, wobei die über ihre Zufuhrzweigleitungen mit derselben Zufuhrleitung verbundenen tangentialen Zuführungskanäle zur Schaffung optimaler Strömungsverhältnisse innerhalb des Drallraums der Dralldüse in Umfangsrichtung der Drallkammer gleich beabstandet sind.

Um bei einer Verstellung der Durchflußeinstelleinrichtung weiterhin optimale Strömungsverhältnisse innerhalb der Drallkammer erzeugen zu können, ist es vorteilhaft, wenn die an eine Zufuhrleitung der Flüssigkeitszuleitung angeschlossenen tangentialen Zufuhrkanäle an ihrer Eintrittsfläche in die Drallkammer einen kleineren oder größeren Strömungsquerschnitt als die an die andere Zufuhrleitung der Flüssigkeitszuleitung angeschlossenen tangentialen Zufuhrkanäle aufweisen, wobei zweckmäßigerweise die Durchflußeinstelleinrichtung in derjenigen Zufuhrleitung angeordnet werden sollte, die an die tangentialen Zuführungskanäle angeschlossen ist, die an ihrer Eintrittsfläche in die Drallkammer den größeren Strömungsquerschnitt aufweisen. Hierdurch kann die Dralldüse mit einem großen Regelbereich betrieben werden, wobei eine hohe Tropfenqualität hinsichtlich des mittleren Tropfendurchmessers und der Tropfenverteilung erreicht wird. Der mittlere Tropfendurchmesser kann bei konstantem Volumenstrom geregelt werden oder es ist möglich, bei Regelung des Volumenstroms das Tropfenspektrum konstant zu halten.

Im folgenden wird die Erfindung an Hand einer Ausführungsform unter Bezugnahme auf die Zeichnung näher erläutert.

Es zeigen:
- Figur 1: eine Prinzipdarstellung einer Ausführungsform einer erfindungsgemäßen Luftbefeuchtungsvorrichtung in Längsansicht;
- Figur 2: eine Vorderansicht einer Luftverwirbelungsstufe der in Figur 1 im Prinzip dargestellten erfindungsgemäßen Luftbefeuchtungsvorrichtung;
- Figur 3: eine Vorderansicht auf eine Düsen- und die Luftverwirbelungsstufe der in Figur 1 gezeigten erfindungsgemäßen Luftbefeuchtungsvorrichtung;
- Figur 4: eine Längsschnittdarstellung einer Düse der Luftverwirbelungsstufe der erfindungsgemäßen Luftbefeuchtungsvorrichtung;
- Figur 5: den Schnitt B - B in Figur 4;
- Figur 6: eine Prinzipdarstellung der in den Figuren 4 und 5 gezeigten Düse der erfindungsgemäßen Luftbefeuchtungsvorrichtung mit Flüssigkeitszuleitung; und
- Figur 7: eine Vorderansicht einer weiteren Ausführungsform der Luftverwirbelungsstufe der in Figur 1 im Prinzip dargestellten erfindungsgemäßen Luftbefeuchtungseinrichtung.

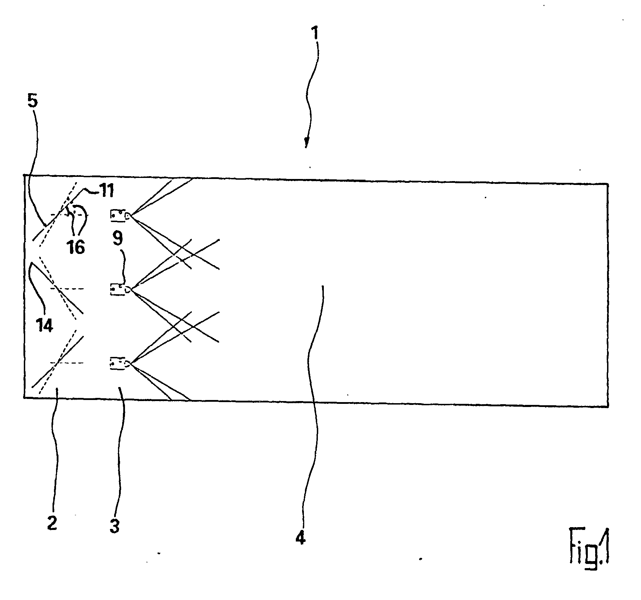

Eine in Figur 1 prinzipiell in Längsansicht gezeigte Ausführungsform einer erfindungsgemäßen Luftbefeuchtungsvorrichtung 1 ist eingangsseitig an eine in den Figuren nicht dargestellte Luftzuleitung und ausgangsseitig an eine in den Figuren ebenfalls nicht dargestellte Feuchtluftableitung angeschlossen.

Im Bereich ihres Eingangsabschnitts hat die Luftbefeuchtungsvorrichtung 1 eine Luftverwirbelungsstufe 2, stromab derselben in einem vorgegebenen Abstand eine Düsenstufe 3 angeordnet ist. Stromab der Düsenstufe 3 erstreckt sich eine Mischstrecke 4, in der die in der Luftverwirbelungsstufe 2 verwirbelte, vergleichsweise trockene Luftströmung die in der Düsenstufe 3 in sie eingeführte Feuchtig- bzw. Flüssigkeit aufnehmen soll.

Im dargestellten Ausführungsbeispiel hat die Luftverwirbelungsstufe 2 eine Vielzahl von Turbulenzflügeln bzw. Winglets 5, die in drei übereinander angeordneten Reihen 6, 7, 8 jeweils zu dritt nebeneinander angeordnet sind. Jedem Turbulenzflügel bzw. Winglet 5 ist in der stromab der Luftverwirbelungsstufe 2 angeordneten Düsenstufe 3 eine als Dralldüse 9 ausgebildete Düse der Düsenstufe 3 zugeordnet.

Die Reihen 6, 7, 8 der Turbulenzflügel bzw. Winglets 5 sind in einer Strömungsquerschnittsebene der die Luftbefeuchtungsvorrichtung 1 durchströmenden Luftströmung parallel und zueinander gleich beabstandet angeordnet. Außerdem haben einander benachbarte Turbulenzflügel bzw. Winglets 5 einer Reihe 6, 7, 8 gleiche Abstände.

Bei anderen Ausführungsformen der erfindungsgemäßen Luftbefeuchtungsvorrichtung 1 ist es möglich, mehrere Luftverwirbelungsstufen 2 und Düsenstufen 3 in alternierender Aufeinanderfolge stromauf bzw. in der Mischstrecke 4 vorzusehen; die Luftverwirbelungsstufen 2 und auch die später erläuterten Düsenstufen 3 können hierbei den gleichen oder einen ähnlichen Aufbau aufweisen.

Jeder Turbulenzflügel bzw. Winglet 5 der Luftverwirbelungsstufe 2 erzeugt einen Luftwirbel 10, der sich zumindest bis zu der dem jeweiligen Turbulenzflügel bzw. Winglet 5 zugeordneten Dralldüse 9 der Düsenstufe 3 erstreckt.

Zur Erzeugung eines derartigen Luftwirbels 10 sind die Turbulenzflügel bzw. Winglets 5 der Luftverwirbelungsstufe 2 in Form rechtwinkliger Dreiecke ausgestaltet. Hierbei sind die Kurzkatheten 11 der die Turbulenzflügel bzw. Winglets 5 bildenden rechtwinkligen Dreiecke parallel zu den Reihen 6, 7, 8 der Turbulenzflügel bzw. Winglets 5 angeordnet, wohingegen die Langkatheten 12 dieser rechtwinkligen Dreiecke senkrecht zu den Reihen 6, 7, 8 der Turbulenzflügel bzw. Winglets 5 verlaufen.

Die in einer Reihe 6, 7, 8 angeordneten Turbulenzflügel bzw. Winglets 5 sind einander entweder mit ihren Langkatheten 12 oder mit ihren Hypotenusen 13 zugewandt. Einander benachbarte bzw. zugeordnete Turbulenzflügel bzw. Winglets 5 benachbarter Reihen 6, 7, 8 sind einander entweder mit ihren Kurzkatheten 11 oder mit ihren durch die Langkatheten 12 und die Hypotenusen 13 gebildeten Ecken 14 zugewandt. Hierbei sind sämtliche Turbulenzflügel bzw. Winglets 5 der Reihe 6 mit ihren Ecken 14 den Ecken 14 der Turbulenzflügel bzw. Winglets 5 der unter der Reihe 6 angeordneten Reihe 7 zugewandt, wohingegen die in der Reihe 7 angeordneten Turbulenzflügel bzw. Winglets 5 mit ihren Kurzkatheten 11 den Kurzkatheten 11 der Turbulenzflügel bzw. Winglets 5 der unter der Reihe 7 angeordneten Reihe 8 zugewandt sind.

Die Mittelpunkte 15 der durch die Turbulenzflügel bzw. Winglets 5 erzeugten Luftwirbel 10 haben in Richtung der Reihen 6, 7, 8 den gleichen Abstand zueinander. Auch senkrecht zur Richtung der Reihen 6, 7, 8 weisen über- bzw. untereinander angeordnete Mittelpunkte 15 der Luftwirbel 10 den gleichen Abstand zueinander auf.

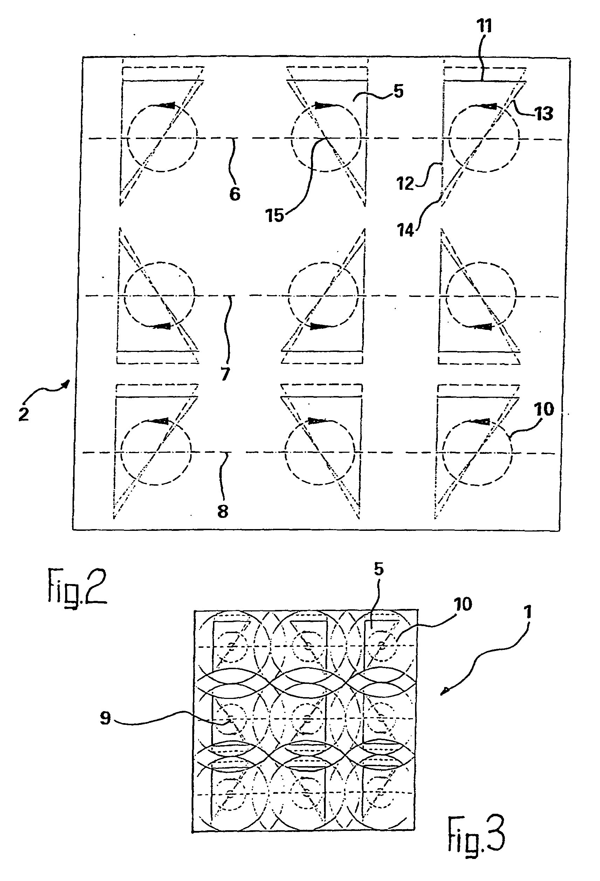

Aufgrund der Anordnung und der Orientierung der Turbulenzflügel bzw. Winglets 5 in der vorbeschriebenen Weise erzeugen die in einer Reihe 6, 7, 8 benachbarten Turbulenzflügel bzw. Winglets 5 Luftwirbel 10 mit gegensinniger Drehrichtung. Des weiteren erzeugen die über- bzw. untereinander angeordneten Turbulenzflügel bzw. Winglets 5 benachbarter Reihen 6, 7, 8 Luftwirbel 10 mit gegensinniger Drehrichtung. Die Drehrichtung der jeweiligen Luftwirbel 10 ergibt sich aus den Pfeilen in den Figuren 2 und 3.

Jeder Turbulenzflügel bzw. Winglet 5 hat an seiner Langkethete 12 eine senkrechte Um- bzw. Abkantung, die einerseits zu einer Versteifung des Turbulenzflügels bzw. Winglets 5 führt und die darüber hinaus die Strömungsverhältnisse beeinflußt.

Die Turbulenzflügel bzw. Winglets 5 sind in unterschiedlicher Weise in bezug auf die Strömungsrichtung der die erfindungsgemäße Luftbefeuchtungsvorrichtung 1 durchlaufenden Luftströmung anstellbar. Hierbei beträgt der Anstellwinkel 16 der Turbulenzflügel bzw. Winglets 5 zwischen 30 Grad und 70 Grad, wobei in Figur 1 ein Anstellwinkel 16 von 45 Grad durch eine durchgezogene Linie und ein Anstellwinkel 16 von 65 Grad durch die gestrichelte Linie gezeigt ist.

Der Anstellwinkel 16 einer Luftverwirbelungsstufe 2 einer erfindungsgemäßen Luftbefeuchtungseinrichtung kann fixiert sein; es ist jedoch auch möglich, die Luftverwirbelungsstufe 2 so zu gestalten, daß der Anstellwinkel 16 der Turbulenzflügel bzw. Winglets 5 einstellbar ist.

Wie aus der Zusammenschau von Figur 1 und Figur 2 bzw. Figur 1 und Figur 3 hervorgeht, ist bei der Luftverwirbelungsstufe 2 in der dargestellten Ausführungsform der erfindungsgemäßen Luftbefeuchtungsvorrichtung 1 jeweils die Kurzkathete 11 des Turbulenzflügels bzw. Winglets 5 stromab der durch die Langkathete 12 und die Hypotenuse 13 gebildeten Ecke 14 des jeweiligen Turbulenzflügels bzw. Winglets 5 angeordnet.

Durch die Turbulenzflügel bzw. Winglets 5 werden die in Figur 3 gezeigten Luftwirbel 10 geschaffen, wobei in der Mitte eines jeden Luftwirbels 10 in Höhe der Düsenstufe 3 eine Dralldüse 9 angeordnet ist.

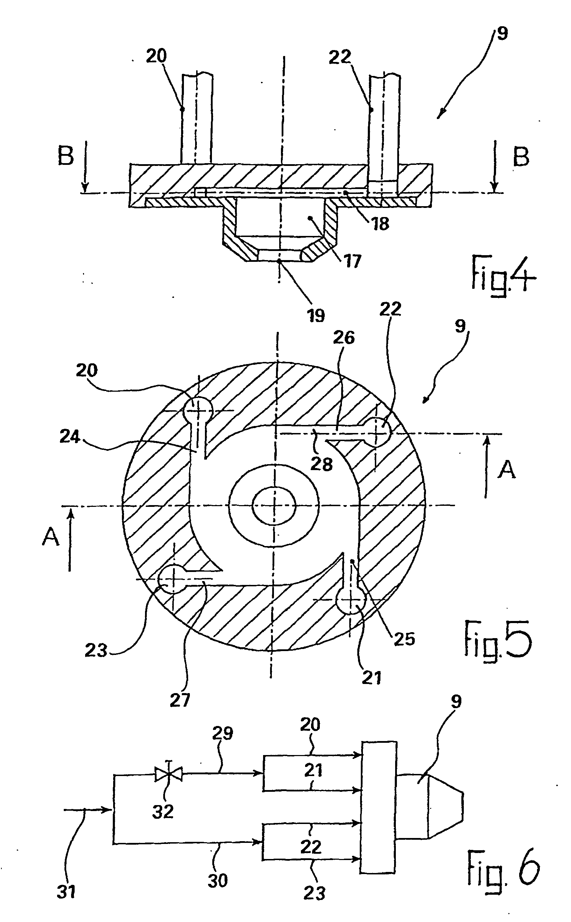

Jede Dralldüse 9 hat, wie sich aus Figur 4 ergibt, einen rotationssymmetrischen Drallraum 17. An seiner Eingangsseite weist der rotationssymmetrische Drallraum 17 eine Drallkammer 18 auf, die einen größeren Durchmesser als der übrige Drallraum 17 hat. An seiner Ausgangsseite hat der Drallraum 17 eine Düsenaustrittsöffnung 19.

Im dargestellten Ausführungsbeispiel hat die Dralldüse 9 vier Zufuhrzweigleitungen 20, 21, 22, 23, die jeweils in einen tangentialen Zuführungskanal 24, 25, 26 münden, die an ihren Eintrittsflächen 28 tangential in die Drallkammer 8 münden. Die vier tangentialen Zuführungskanäle 24, 25, 26, 27 sind gleichmäßig über den Umfang der Drallkammer 18 verteilt.

Jeweils zwei Zufuhrzweigleitungen 20, 21 bzw. 22, 23 sind an eine Zufuhrleitung 29 bzw. 30 angeschlossen, wobei die beiden Zufuhrleitungen 29, 30 ihrerseits an eine Flüssigkeitszuleitung 31 angeschlossen sind.

In der Zufuhrleitung 29, die sich in die Zufuhrzweigleitungen 20, 21 aufteilt, ist eine Durchflußeinstelleinrichtung 32, bei der es sich beispielsweise um ein Regelventil handeln kann, angeordnet.

Die der mit der Durchflußeinstelleinrichtung 32 ausgerüsteten Zufuhrleitung 29 zugeordneten Zufuhrzweigleitungen 20, 21 sind an einander diametral gegenüberliegende tangentiale Zuführungskanäle 24, 25 zur Drallkammer 18 angeschlossen.

Im Betrieb der erfindungsgemäßen Luftbefeuchtungsvorrichtung 1 wird jede Dralldüse 9 der Düsenstufe 3 über die Zufuhrzweigleitungen 20, 21, 22, 23 mit Flüssigkeit beschickt. Die Flüssigkeit gelangt über die tangentialen Zuführungskanäle 24, 25, 26, 27 in die Drallkammer 18 und in den sich anschließenden Drallraum 17. Auf der Achse des Drallraums 17 bildet sich ein Luftkern. Es entsteht das typische Zerstäubungsbild einer Hohlkegeldüse.

Der gesamte durch die Flüssigkeitszuleitung 31 strömende Flüssigkeitsstrom wird in einer ersten Teilung auf die beiden Zufuhrleitungen 29, 30 aufgeteilt; der Flüssigkeitsstrom durch die Zufuhrleitung 29 wird in einer weiteren Teilung auf die Zufuhrzweigleitungen 20, 21 und der Flüssigkeitsstrom durch die Zufuhrleitung 30 entsprechend auf die Zufuhrzweigleitungen 22, 23 aufgeteilt.

Jeweils zwei einander diametral gegenüberliegende tangentiale Zuführungskanäle 24, 25 bzw. 26, 27 sind über die Zufuhrzweigleitungen 20, 21 bzw. 22, 23 an die Zufuhrleitung 29 bzw. die Zufuhrleitung 30 angeschlossen.

Mit Hilfe der Durchflußeinstelleinrichtung 32 ist es unter der Voraussetzung, daß der Druck in der Flüssigkeitszuleitung 31 konstant ist, möglich, den Volumenstrom der zu zerstäubenden Flüssigkeit zu halbieren, falls der Betrieb der Dralldüse mit vollständig geöffneter Durchflußeinstelleinrichtung 32 der Normalzustand ist, bzw. zu verdoppeln, falls der Betrieb der Dralldüse mit vollständig geschlossener Durchflußeinstelleinrichtung 32 der Normalzustand ist. Dabei ist keine wesentliche Änderung der Tropfengrößenverteilung zu verzeichnen. Innerhalb dieser beiden Grenzwerte der Position der Durchflußeinstelleinrichtung 32 kann jeder Zwischenzustand eingestellt werden. Auch dabei tritt keine signifikante Änderung der Tropfengröße im mittels der Dralldüse 9 abgestrahlten Fluidkegel auf.

Die an die Zufuhrleitung 29, in der die Durchflußeinstelleinrichtung 32 angeordnet ist, über die Zufuhrzweigleitungen 20 und 21 angeschlossenen tangentialen Zuführungskanäle 24, 25 haben an ihrer Eintrittsfläche 28 in die Drallkammer 18 einen größeren Strömungsquerschnitt als die beiden anderen tangentialen Zuführungskanäle 26, 27, die über die Zufuhrzweigleitungen 22, 23 an die Zufuhrleitung 30 angeschlossen sind. Hierdurch wird es möglich, den mittleren Tropfendurchmesser bei konstantem Volumenstrom zu regeln oder bei Regelung des Volumenstroms das Tropfenspektrum konstant zu halten.

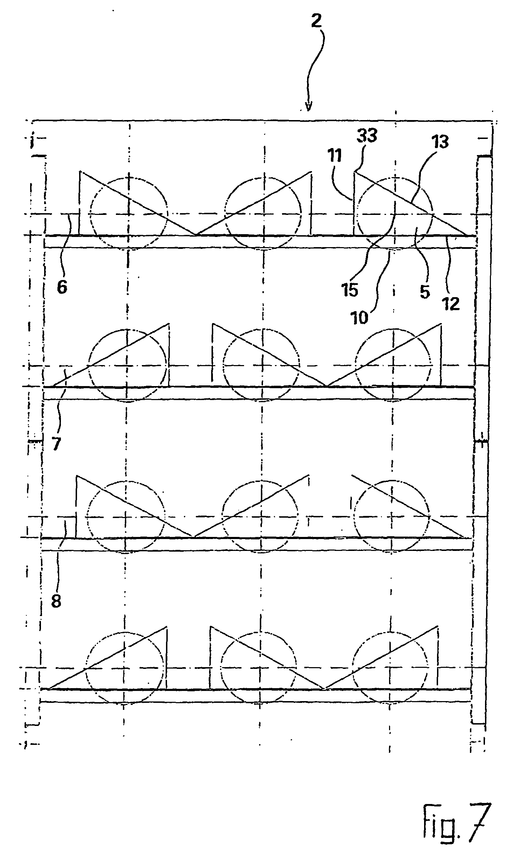

Eine in Figur 7 gezeigte weitere Ausführungsform der Luftverwirbelungsstufe 2 der erfindungsgemäßen Luftbefeuchtungsvorrichtung 1 unterscheidet sich von der vorstehend anhand von Figur 2 beschriebenen Luftverwirbelungsstufe 2 dadurch, daß die Langkatheten 12 der die Turbulenzflügel bzw. Winglets 5 bildenden rechtwinkligen Dreiecke parallel zu den Reihen 6, 7, 8 der Turbulenzflügel bzw. Winglets 5 angeordnet sind, wohingegen die Kurzkatheten 11 dieser rechtwinkligen Dreiecke senkrecht zu den Reihen 6, 7, 8 der Turbulenzflügel bzw. Winglets 5 verlaufen.

Die in einer Reihe 6, 7, 8 angeordneten Turbulenzflügel bzw. Winglets 5 sind in Figur 7 einander entweder mit ihren Kurzkatheten 11 oder mit ihren Hypotenusen 13 zugewandt. Einander benachbarte bzw. zugeordnete Turbulenzflügel bzw. Winglets 5 benachbarter Reihen 6, 7, 8 sind einander mit ihren Langkatheten 12 und mit ihren durch die Kurzkatheten 11 und die Hypotenusen 13 gebildeten Ecken 33 zugewandt. Hierbei sind sämtliche Turbulenzflügel bzw. Winglets der Reihe 6 mit ihren Langkatheten 12 den Ecken 33 der Turbulenzflügel bzw. Winglets 5 der unter der Reihe 6 angeordneten Reihe 7 zugewandt usw.

Auch bei der Ausführungsform gemäß Figur 7 haben die Mittelpunkte 15 der durch die Turbulenzflügel bzw. Winglets 5 erzeugten Luftwirbel 10 in Richtung der Reihen 6, 7, 8 den gleichen Abstand zueinander. Auch senkrecht zur Richtung der Reihen 6, 7, 8 weisen über- bzw. untereinander angeordnete Mittelpunkte 15 der Luftwirbel 10 den gleichen Abstand zueinander auf.

Bei der in Figur 7 gezeigten Ausführungsform der Luftverwirbelungsstufe 2 ist jeder Turbulenzflügel bzw. Winglet an seiner Kurzkathete 11 mit einer senkrechten Um- bzw. Abkantung versehen.

Die Langkathete 12 des Turbulenzflügel bzw. Winglets ist jeweils stromab der durch die Kurzkathete 11 und die Hypotenuse 13 gebildeten Ecke 33 des jeweiligen Turbulenzflügels bzw. Winglets 5 angeordnet.

Hinsichtlich der weiteren Funktionen, z.B. der Verstellbarkeit etc., stimmt die in Figur 7 gezeigte Ausführungsform der Luftverwirbelungsstufe 2 mit der in Figur 2 gezeigten überein.

## Patentansprüche

1. Luftbefeuchtungsvorrichtung, die eingangsseitig an eine Luftzuleitung und ausgangsseitig an eine Feuchtluftableitung angeschlossen ist, mit einer Luftverwir- belungsstufe (2), mittels der die in die Luftver- wirbelungsvorrichtung (1) eintretende Luftströmung verwirbelbar ist und die eine Vielzahl Turbulenzflügel bzw. Winglets (5) aufweist, mittels denen jeweils ein sich in Strömungsrichtung erstreckender Luftwirbel (10) erzeugbar ist, einer Düsenstufe (3), die in Strömungsrichtung stromab der Luftverwirbelungsstufe (2) angeordnet und mittels der die in der Luftverwirbelungsstufe (2) verwirbelte Luftströmung mit einer Flüssigkeit beaufschlagbar ist, und einer Mischstrecke (4), die in Strömungsrichtung stromab der Düsenstufe (3) angeordnet ist, **dadurch gekennzeichnet, dass** die Turbulenzflügel bzw. Winglets (5) in Reihen (6, 7, 8) nebeneinander im Strömungsquerschnitt der Luftströmung angeordnet sind und dass in einer Reihe (6, 7, 8) benachbarte Turbulenzflügel bzw. Winglets (5) Luftwirbel (10) mit gegensinniger Drehrichtung erzeugen.

2. Luftbefeuchtungsvorrichtung nach Anspruch 1, bei der sich jeder mittels der Turbulenzflügel bzw. Winglets erzeugte Luftwirbel (10) zumindest bis zur Düsenstufe (3) der Luftbefeuchtungsvorrichtung (1) erstreckt.

3. Luftbefeuchtungsvorrichtung nach Anspruch 1 oder 2, bei der einander benachbarte bzw. einander zugeordnete Turbulenzflügel bzw. Winglets benachbarter Reihen (6, 7, 8) Luftwirbel (10) mit gegensinniger Drehrichtung erzeugen.

4. Luftbefeuchtungsvorrichtung nach einem der Ansprüche 1 bis 3, bei der die Reihen (6, 7, 8) von Turbulenzflügeln bzw. Winglets (5) einer Luftverwirbelungsstufe (2) in einer Strömungsquerschnittsebene angeordnet sind.

5. Luftbefeuchtungsvorrichtung nach einem der Ansprüche 1 bis 4, bei der die Reihen (6, 7, 8) von Turbulenzflügeln bzw. Winglets (5) einer Luftverwirbelungsstufe (2) zueinander parallel angeordnet sind.

6. Luftbefeuchtungsvorrichtung nach einem der Ansprüche 1 bis 5, bei der die Reihen (6, 7, 8) von Turbulenzflügeln bzw. Winglets (5) einer Luftverwirbelungsstufe (2) zueinander gleich beabstandet sind.

7. Luftbefeuchtungsvorrichtung nach einem der Ansprüche 1 bis 6, bei der die Mittelpunkte (15) der von benachbarten Turbulenzflügeln bzw. Winglets (5) einer Reihe (6, 7, 8) erzeugten Luftwirbel (10) zueinander gleich beabstandet sind.

8. Luftbefeuchtungsvorrichtung nach einem der Ansprüche 1 bis 7, die in in Strömungsrichtung alternierender Aufeinanderfolge zwei oder mehr Luftverwirbelungs- (2) einanderfolge zwei oder mehr Luftverwirbelungs- (2) und Düsenstufen (3) aufweist.

9. Luftbefeuchtungsvorrichtung nach einem der Ansprüche 1 bis 8, bei der die Turbulenzflügel bzw. Winglets (5) dreieckig ausgestaltet sind.

10. Luftbefeuchtungsvorrichtung nach Anspruch 9, bei der die Turbulenzflügel bzw. Winglets (5) die Form eines rechtwinkligen Dreiecks aufweisen.

11. Luftbefeuchtungsvorrichtung nach Anspruch 10, bei der die Kurzkathete (11) jedes als rechtwinkliges Dreieck ausgebildeten Turbulenzflügels bzw. Winglets (5) parallel und die Langkathete (12) desselben senkrecht zur Reihe (6, 7, 8) des jeweiligen Turbulenzflügels bzw. Winglets (5) angeordnet ist.

12. Luftbefeuchtungsvorrichtung nach Anspruch 10 oder 11, bei der die Langkatheten (12) oder die Hypotenusen (13) einander benachbarter Turbulenzfügel bzw. Winglets (5) einer Reihe (6, 7, 8) einander zugewandt sind.

13. Luftbefeuchtungsvorrichtung nach einem der Ansprüche 10 bis 12, bei der die durch die Langkathete (12) und die Hypotenuse (13) gebildeten Ecken (14) oder die Kurzkathete (11) einander benachbarter bzw. zugeordneter Turbulenzflügel bzw. Winglets (5) benachbarter Reihen (6, 7, 8) einander zugewandt sind.

14. Luftbefeuchtungsvorrichtung nach einem der Ansprüche 10 bis 13, bei der jeder Turbulenzflügel bzw. Winglet (5) an seiner Langkathete (12) eine senkrechte Umkantung aufweist.

15. Luftbefeuchtungsvorrichtung nach einem der Ansprüche 10 bis 14, bei der jeder Turbulenzflügel bzw. Winglet (5) zur Strömungsrichtung einen Anstellwinkel (16) zwischen 30 Grad und 70 Grad, vorzugsweise zwischen 40 Grad und 60 Grad, aufweist, wobei die durch die Langkathete (12) und die Hypotenuse (13) gebildete Ecke (14) stromauf der Kurzkathete (11) angeordnet ist.

16. Luftbefeuchtungsvorrichtung nach Anspruch 10, bei der die Langkathete (12) jedes als rechtwinkliges Dreieck ausgebildeten Turbulenzflügels bzw. Winglets (5) parallel und die Kurzkathete (11) desselben senkrecht zur Reihe (6, 7, 8) des jeweiligen Turbulenzflügels bzw. Winglets (5) angeordnet ist.

17. Luftbefeuchtungsvorrichtung nach Anspruch 10 oder 16, bei der die Kurzkatheten (11) oder die Hypotenusen (13) einander benachbarter Turbulenzflügel bzw. Winglets (5) einer Reihe (6, 7, 8) einander zugewandt sind.

18. Luftbefeuchtungsvorrichtung nach einem der Ansprüche 10, 16 oder 17, bei der die durch die Kurzkathete (11) und die Hypotenuse (13) gebildete Ecke (33) und die Langkathete (12) einander benachbarter bzw. zugeordneter Turbulenzflügel bzw. Winglets (5) benachbarter Reihen (6, 7, 8) einander zugewandt sind.

19. Luftbefeuchtungsvorrichtung nach einem der Ansprüche 10 oder 16 bis 18, bei der jeder Turbulenzflügel bzw. Winglet (5) an seiner Kurzkathete (11) eine senkrechte Umkantung aufweist.

20. Luftbefeuchtungsvorrichtung nach einem der Ansprüche 10 oder 16 bis 19, bei der jeder Turbulenzflügel bzw. Winglet (5) zur Strömungsrichtung einen Anstellwinkel (16) zwischen 30 Grad und 70 Grad, vorzugsweise zwischen 40 Grad und 60 Grad, aufweist, wobei die durch die Kurzkathete (11) und die Hypotenuse (13) gebildete Ecke (33) stromauf der Langkathete (12) angeordnet ist.

21. Luftbefeuchtungsvorrichtung nach Anspruch 15 oder 20, bei der der Anstellwinkel (16) der Turbulenzflügel bzw. Winglets (5) einstellbar ist.

22. Luftbefeuchtungsvorrichtung nach einem der Ansprüche 1 bis 21, bei der jedem Turbulenzflügel bzw. Winglet (5) der Luftverwirbelungsstufe (2) eine Düse (9) der Düsenstufe (3) zugeordnet ist.

23. Luftbefeuchtungsvorrichtung nach Anspruch 22, bei der die einem Turbulenzflügel bzw. Winglet (5) zugeordnete Düse (9) mittig in bezug auf den von diesem Turbulenzflügel bzw. Winglet (5) erzeugten Luftwirbel (10) angeordnet ist.

24. Luftbefeuchtungsvorrichtung nach einem der Ansprüche 1 bis 23, bei der die Düsenstufe (3) eine Vielzahl Düsen (9) aufweist, von denen jede als Dralldüse ausgebildet ist.

25. Luftbefeuchtungsvorrichtung nach Anspruch 24, bei der jede Dralldüse (9) der Düsenstufe (3) einen rotationssymmetrischen Drallraum (17) aufweist, der eingangsseitig eine Drallkammer (18) mit größerem Durchmesser hat, in die tangentiale Zuführungskanäle (24, 25, 26, 27) einmünden, die in Umfangsrichtung der Drallkammer (18) gleich beabstandet sind.

26. Luftbefeuchtungsvorrichtung nach Anspruch 25, bei der eine Flüssigkeitszuleitung (31) jeder Dralldüse (9) zumindest zwei Zufuhrleitungen (29, 30) aufweist, auf die der die Flüssigkeitszuleitung (31) durchlaufende Flüssigkeitsstrom aufteilbar ist, wobei in zumindest einer Zufuhrleitung (29) eine Durchflusseinstelleinstelleinrichtung (32) angeordnet und die zumindest zwei Zufuhrleitungen (29, 30) an die tangentialen Zuführungs- kanäle (24, 25, 26, 27) der Drallkammer (18) angeschlos- sen sind.

27. Luftbefeuchtungsvorrichtung nach Anspruch 26, bei der sich jede Zufuhrleitung (29, 30) in vorzugsweise gleich viele Zufuhrzweigleitungen (20, 21; 22, 23) aufteilt.

28. Luftbefeuchtungsvorrichtung nach Anspruch 27, bei der jede Zufuhrzweigleitung (20, 21, 22, 23) in einen tangentialen Zuführungskanal (24, 25, 26, 27) der Drallkammer (18) mündet und die über ihre Zufuhrzweigleitungen (20, 21, 22, 23) mit derselben Zufuhrleitung (29, 30) verbundenen tangentialen Zuführungskanäle (24, 25, 26, 27) in Umfangsrichtung der Drallkammer (18) gleich beabstandet sind.

29. Luftbefeuchtungsvorrichtung nach einem der Ansprüche 26 bis 28, bei der an ihrer Eintrittsfläche (28) in die Drallkammer (18) die an eine Zufuhrleitung (29, 30) der Flüssigkeitszuleitung (31) angeschlossenen tangentialen Zuführkanäle (24, 25, 26, 27) einen kleineren oder größeren Strömungsquerschnitt als die an die andere Zufuhrleitung (30, 29) der Flüssigkeitszuleitung (31) angeschlossenen tangentialen Zuführkanäle (27, 26, 25, 24) aufweisen.

30. Luftbefeuchtungsvorrichtung nach Anspruch 29, bei der die Durchflusseinstelleinrichtung (32) in derjenigen Zufuhrleitung (29) angeordnet ist, die an die tangentialen Zuführungskanäle (24, 25) angeschlossen ist, die an ihrer Eintrittsfläche (28) in die Drallkammer (18) den größeren Strömungsquerschnitt aufweisen.

## Claims

1. An air humidification device which on the input side is connected to an air inlet, and on the output side to a humid air outlet, comprising an air turbulence stage (2) by means of which the airstream entering the air turbulence device (1) is swirlable, and comprising a multitude of turbulence winglets (5) by means of which an air vortex (10) that extends in the direction of the stream can be generated, and comprising a nozzle stage (3) which in the direction of the stream is arranged downstream of the air turbulence stage (2) and by means of which the airstream that is swirled in the air turbulence stage (2) can be impinged upon by a liquid, and comprising a mixing stretch (4) which in the direction of the stream is arranged downstream of the nozzle stage (3), **characterised in that** the turbulence winglets (5) are arranged in rows (6, 7, 8) side-by-side in the stream cross section of the airstream, and **in that** in a row (6, 7, 8) adjacent turbulence winglets (5) generate air vortices (10) with an opposite direction of rotation.

2. The air humidification device according to claim 1 in which each vortex (10) generated by means of the turbulence winglets extends at least up to the nozzle stage (3) of the air humidification device (1).

3. The air humidification device according to claim 1 or 2, in which adjacent or associated turbulence winglets of adjacent rows (6, 7, 8) generate air vortices (10) with an opposite direction of rotation.

4. The air humidification device according to any one of claims 1 to 3, in which the rows (6, 7, 8) of turbulence winglets (5) of an air turbulence stage (2) are arranged in a plane of the stream cross section.

5. The air humidification device according to any one of claims 1 to 4, in which the rows (6, 7, 8) of turbulence winglets (5) of an air turbulence stage (2) are arranged so as to be parallel in relation to each other.

6. The air humidification device according to any one of claims 1 to 5, in which the rows (6, 7, 8) of turbulence winglets (5) of an air turbulence stage (2) are arranged so as to be equidistant from each other.

7. The air humidification device according to any one of claims 1 to 6, in which the centres (15) of the air vortices (10) generated by adjacent turbulence winglets (5) of a row (6, 7, 8) are arranged so as to be equidistant from each other.

8. The air humidification device according to any one of claims 1 to 7, which air humidification device in alternating sequence in the direction of the stream comprises two or more air turbulence stages (2) and nozzle stages (3).

9. The air humidification device according to any one of claims 1 to 8, in which the turbulence winglets (5) are triangular in shape.

10. The air humidification device according to claim 9, in which the turbulence winglets (5) are in the shape of a right-angled triangle.

11. The air humidification device according to claim 10, in which the short cathetus (11) of each turbulence winglet (5) in the shape of a right-angled triangle is arranged parallel, while the long cathetus (12) of the triangle is arranged perpendicular in relation to the row (6, 7, 8) of the respective turbulence winglet (5).

12. The air humidification device according to claim 10 or 11, in which the long catheti (12) or the hypotenuses (13) of adjacent turbulence winglets (5) of a row (6, 7, 8) face each other.

13. The air humidification device according to any one of claims 10 to 12, in which the corners (14) formed by the long cathetus (12) and the hypotenuse (13) or the short cathetus (11) of adjacent or associated turbulence winglets (5) of adjacent rows (6, 7, 8) face each other.

14. The air humidification device according to any one of claims 10 to 13, in which the long cathetus (12) of each turbulence winglet (5) comprises a vertical folded-back region.

15. The air humidification device according to any one of claims 10 to 14, in which each turbulence winglet (5) has an angle of incidence (16) of between 30 degrees and 70 degrees, preferably between 40 degrees and 60 degrees, in relation to the direction of the stream, wherein the corner (14) formed by the long cathetus (12) and by the hypotenuse (13) is arranged upstream of the short cathetus (11).

16. The air humidification device according to claim 10, in which the long cathetus (12) of each turbulence winglet (5) in the shape of a right-angled triangle is arranged so as to be parallel to, and the short cathetus (11) of the same is arranged so as to be perpendicular to, the row (6, 7, 8) of the respective turbulence winglet (5).

17. The air humidification device according to claim 10 or 16, in which the short catheti (11) or the hypotenuses (13) of adjacent turbulence winglets (5) of a row (6, 7, 8) face each other.

18. The air humidification device according to any one of claims 10, 16 or 17, in which the corner (33) that is formed by the short cathetus (11) and by the hypotenuse (13), and the long cathetus (12) of adjacent or associated turbulence winglets (5) of adjacent rows (6, 7, 8) face each other.

19. The air humidification device according to any one of claims 10 or 16 to 18, in which the short cathetus (11) of each turbulence winglet (5) comprises a vertical folded-back region.

20. The air humidification device according to any one of claims 10 or 16 to 19, in which each turbulence winglet (5) has an angle of incidence (16) of between 30 degrees and 70 degrees, preferably between 40 degrees and 60 degrees, in relation to the direction of the stream, wherein the corner (33) formed by the short cathetus (11) and by the hypotenuse (13) is arranged upstream of the long cathetus (12).

21. The air humidification device according to claim 15 or 20, in which the angle of incidence (16) of the turbulence winglets (5) is adjustable.

22. The air humidification device according to any one of claims 1 to 21, in which a nozzle (9) of the nozzle stage (3) is associated with each turbulence winglet (5) of the air turbulence stage (2).

23. The air humidification device according to claim 22, in which the nozzle (9) associated with a turbulence winglet (5) is arranged in the centre in relation to the vortex (10) generated by this turbulence winglet (5).

24. The air humidification device according to any one of claims 1 to 23, in which the nozzle stage (3) comprises a multitude of nozzles (9), every one being a swirl nozzle.

25. The air humidification device according to claim 24, in which each swirl nozzle (9) of the nozzle stage (3) comprises a rotation-symmetrical swirl chamber (17) that on the inlet side has a swirl chamber (18) of a larger diameter, into which swirl chamber (17) the tangential supply channels (24, 25, 26, 27) feed, which supply channels (24, 25, 26, 27) are spaced apart in circumferential direction of the swirl chamber (18) so as to be equidistant from each other.

26. The air humidification device according to claim 25, in which a liquid supply line (31) of each swirl nozzle (9) comprises at least two supply lines (29, 30) into which the liquid stream that passes through the liquid feed line (31) can be split, wherein in at least one supply line (29) a through-flow adjustment device (32) is arranged, and the supply lines (29, 30), of which there are at least two, are connected to the tangential supply channels (24, 25, 26, 27) of the swirl chamber (18).

27. The air humidification device according to claim 26, in which each supply line (29, 30) splits into preferably the same number of supply branch lines (20, 21; 22, 23).

28. The air humidification device according to claim 27, in which each supply branch line (20, 21, 22, 23) leads into a tangential supply channel (24, 25, 26, 27) of the swirl chamber (18), and in which the tangential supply channels (24, 25, 26, 27), which by way of their supply branch lines (20, 21, 22, 23) are connected to the same supply line (29, 30), are spaced apart so as to be equidistant from each other in circumferential direction of the swirl chamber (18).

29. The air humidification device according to any one of claims 26 to 28, in which at their entry faces (28) into the swirl chamber (18) the tangential supply channels (24, 25, 26, 27) that are connected to a supply line (29, 30) of the liquid supply line (31) have a smaller or larger stream cross section than the tangential supply channels (27, 26, 25, 24) that are connected to the other supply line (30, 29) of the liquid supply line (31).

30. The air humidification device according to claim 29, in which the flow-through adjustment device (32) is arranged in that supply line (29) which is connected to the tangential supply channels (24, 25) that on their entry face (28) into the swirl chamber (18) have the larger stream cross section.

## Revendications

1. Humidificateur d'air, branché côté entrée sur une canalisation d'alimentation d'air et côté sortie sur une canalisation d'évacuation de l'air humide, avec un étape de tourbillonnement d'air (2), au moyen de laquelle le courant d'air pénétrant dans l'humidificateur (1) peut être amené à tourbillonner et comportant une pluralité de pales de turbulence ou d'ailettes (5), à l'aide desquelles respectivement un tourbillon d'air (10) s'étendant dans le sens du courant peut être généré et être appliqué à une étape de buses (3), qui dans le sens de courant est disposée en aval de l'étape de tourbillonnement d'air (2) et au moyen de laquelle le courant d'air tourbillonné dans l'étape de tourbillonnement d'air peut être soumis à un liquide et avec un trajet de mélange (4), qui dans le sens du courant est disposé en aval de l'étape de buses (3), **caractérisé en ce que** les pales de turbulence ou les ailettes (5) sont disposées côte à côte en rangées (6, 7, 8) dans la section transversale du courant du flux d'air et **en ce que** des pales de turbulences ou des ailettes (5) voisines dans une rangée génèrent des tourbillons d'air (10) dans un sens de rotation contraire.

2. Humidificateur d'air selon la revendication 1, dans lequel chaque tourbillon d'air (10) généré par les pales de turbulences ou les ailettes s'étend au moins jusqu'à l'étape de buses (3) de l'humidificateur (1).

3. Humidificateur d'air selon la revendication 1 ou 2, dans lequel des pales de turbulence ou des ailettes voisines ou mutuellement associées de rangées voisines (6, 7, 8) génèrent des tourbillons d'air (10), à sens de rotation opposé.

4. Humidificateur d'air selon l'une quelconque des revendications 1 à 3, dans lequel les rangées (6, 7, 8) de pales de turbulence ou d'ailettes (5) d'une étape de tourbillonnement d'air (2) sont disposées dans un plan de section transversale du courant.

5. Humidificateur d'air selon l'une quelconque des revendications 1 à 4, dans lequel les rangées (6, 7, 8) de pales de turbulence ou d'ailettes (5) d'une étape de tourbillonnement d'air (2) sont disposées en parallèle l'une par rapport à l'autre.

6. Humidificateur d'air selon l'une quelconque des revendications 1 à 5, dans lequel les rangées (6, 7, 8) de pales de turbulence ou d'ailettes (5) d'une étape de tourbillonnement d'air (2) ont une distance égale les unes par rapport au autres.

7. Humidificateur d'air selon l'une quelconque des revendication 1 à 6, dans lequel les points centraux (15) des tourbillons d'air (10) générés par des pales de turbulences ou des ailettes (5) voisines d'une rangée (6, 7, 8) ont une distance égale entre elles.

8. Humidificateur d'air selon l'une quelconque des revendications 1 à 7, qui dans la séquence alternée dans le sens du courant comporte deux ou plusieurs étapes de tourbillonnement d'air (2) et de buses (3).

9. Humidificateur d'air selon l'une quelconque des revendications 1 à 8, dans lequel les pales de turbulence ou les ailettes (5) sont conçues sous forme triangulaire.

10. Humidificateur d'air selon la revendication 9, dans lequel les pales de turbulence ou les ailettes (5) ont la forme d'un triangle rectangle.

11. Humidificateur d'air selon la revendication 10, dans lequel le petit côté à angle droit (11) de chaque pale de turbulence ou ailette (5) conçue sous la forme d'un triangle rectangle sont disposés à la parallèle et les grands côtés à angle droit (12) de ces dernières sont disposés à la perpendiculaire de la rangée (6, 7, 8) de la pale de turbulences ou de l'ailette (5) respective.

12. Humidificateur d'air selon l'une quelconque des revendications 10 à 11, dans lequel les grands côtés à angle droit (12) ou les hypoténuses (13) de pales de turbulences ou d'ailettes voisines (5) de rangées voisines (6, 7, 8) se font face.

13. Humidificateur d'air selon l'une quelconque des revendications 10 à 12, dans lequel les angles (14) formés par les grands côté à angle droit (12) et l'hypoténuse (13) ou les petits côtés à angle droit (11) de pales de turbulences ou d'ailettes voisines (5) de rangées voisines (6, 7, 8) se font face.

14. Humidificateur d'air selon l'une quelconque des revendications 10 à 13, dans lequel chaque pale de turbulences ou chaque ailette (5) comporte un repli perpendiculaire sur son grand côté à angle droit (12).

15. Humidificateur d'air selon l'une quelconque des revendications 10 à 14, dans lequel chaque pale de turbulences ou chaque ailette (5) comporte dans le sens du courant un angle de d'incidence (16) entre 30 degrés et 70 degrés, de préférence entre 40 degrés et 60 degrés, l'angle (14) formé par le grand côté à angle droit (12) et par l'hypoténuse (13) étant disposé en amont du petit côté à angle droit (11).

16. Humidificateur d'air selon la revendication 10, dans lequel le grand côté à angle droit (12) de chaque pale de turbulences ou de chaque ailette (5) conçue sous la forme d'un triangle rectangle est disposé en parallèle et le petit côté à angle droit (11) de ces dernières est disposé à la perpendiculaire de la rangée (6, 7, 8) de la pale de turbulences ou de l'ailette (5) respective.

17. Humidificateur d'air selon l'une quelconque des revendications 10 à 16, dans lequel le petit côté à angle droit (11) ou l'hypoténuse (13) de pales de turbulences ou d'ailettes (5) voisines d'une rangée se font face.

18. Humidificateur d'air selon l'une quelconque des revendications 10, 16 ou 17, dans lequel l'angle (33) formé par le petit côté à angle droit (11) et l'hypoténuse (13) et le grand côté à angle droit (12) de pales de turbulences ou d'ailettes (5) voisines ou associées de rangées voisines (6, 7, 8) se font face.

19. Humidificateur d'air selon l'une quelconque des revendications 10 ou 16 à 18, dans lequel chaque pale de turbulences ou ailette (5) présente un repli perpendiculaire sur son petit côté à angle droit (11).

20. Humidificateur d'air selon l'une quelconque des revendications 10 ou 16 à 19, dans lequel chaque pale de turbulences ou ailette (5) comporte dans le sens du courant un angle d'incidence (16) entre 40 degrés et 70 degrés, de préférence entre 40 degrés et 60 degrés, l'angle (33) formé par le petit côté à angle droit (11) et l'hypoténuse (13) étant disposé en amont du grand côté à angle droit (12).

21. Humidificateur d'air selon l'une quelconque des revendications 15 à 20, dans lequel l'angle d'incidence (16) des pales de turbulences ou des ailettes (5) est réglable.

22. Humidificateur d'air selon l'une quelconque des revendications 1 à 21, dans lequel une buse (9) de l'étape de buses (3) est associée à chaque pale de turbulences ou à chaque ailette (5) de l'étape de tourbillonnement d'air (2).

23. Humidificateur d'air selon la revendication 22, dans lequel la buse (9) associée à une pale de turbulences ou à une ailette (5) est placée au centre par rapport au tourbillonnement d'air (10) généré par ladite pale de turbulences ou ailette (5).

24. Humidificateur d'air selon l'une quelconque des revendications 1 à 23, dans lequel l'étape de buses (3) comporte une pluralité de buses (9) dont chacune est conçue sous la forme d'une buse rotative.

25. Humidificateur d'air selon la revendication 24, dans lequel chaque buse rotative (9) de l'étape de buses (3) comporte un espace de rotation symétrique (17) qui côté entrée présente un compartiment de rotation (18) de plus grand diamètre dans lequel débouchent des canalisations d'alimentation (24, 25, 26, 27) tangentielles, qui présentent une même distance dans le sens périphérique du compartiment de rotation (18).

26. Humidificateur d'air selon la revendication 25, dans lequel une conduite d'alimentation de liquide (31) de chaque buse de rotation (9) comporte au moins deux conduites d'amenée (29, 30), sur lesquelles on peut distribuer le flux de liquide traversant la conduite d'alimentation de liquide (31), un dispositif de réglage du débit (32) étant disposé dans au moins une conduite d'amenée (28) et au moins les deux conduites d'amenée (29, 30) étant raccordées sur les canalisations d'alimentation (24, 25, 26, 27) du compartiment de rotation (18).

27. Humidificateur d'air selon la revendication 26, dans lequel chaque conduite d'amenée (29, 30) est divisée en de préférence un même nombre de dérivations d'amenée (20, 21 ; 22, 23).

28. Humidificateur d'air selon la revendication 27, dans lequel chaque dérivation d'amenée (20, 21 ; 22, 23) débouche dans une canalisation d'alimentation tangentielle (24, 25, 26, 27) du compartiment de rotation (18) et les canalisations d'alimentation tangentielles (24, 25, 26, 27) reliées par l'intermédiaire de leurs dérivations (20, 21, 22, 23) présentent la même distance dans le sens périphérique du compartiment de rotation (18).

29. Humidificateur d'air selon l'une quelconque des revendications 26 à 28, dans lequel sur sa surface d'entrée (28) dans le compartiment de rotation (18) les canalisations d'alimentation tangentielles (24, 25, 26, 27) raccordées sur une conduite d'amenée (29, 30) de la conduite d'alimentation en liquide (31) présentent un section transversale d'écoulement inférieure ou supérieure à celle des canalisations d'alimentation tangentielles (27, 26, 25, 24) raccordées sur les autres conduites d'amenée (29, 30) de la conduite d'alimentation en liquide (31).

30. Humidificateur d'air selon la revendication 29, dans lequel le dispositif de réglage du débit (32) est disposé dans la même conduite d'alimentation (29) qui est raccordée sur les canalisations d'alimentation tangentielles (24, 25) qui sur leur surface d'entrée (28) dans le compartiment de rotation (18) présentent la plus grande section transversale d'écoulement.
